# EUROPÄISCHE PATENTSCHRIFT

(11) **EP 0 773 434 B1**
(45) Veröffentlichungstag und Bekanntmachung des Hinweises auf die Patenterteilung: **07.08.2002**
(21) Anmeldenummer: 95115905.2
(22) Anmeldetag: 10.10.1995
(51) Int. Cl.: G01G 1/00, G01L 1/22, G01G 3/14

(54) **Kraftaufnehmer**
Force transducer
Capteur de force

(43) Veröffentlichungstag der Anmeldung: 14.05.1997
(73) Patentinhaber: Hottinger Baldwin Messtechnik GmbH, 64293 Darmstadt (DE)
(72) Erfinder: Von Hertling, Felix, D-64853 Otzberg (DE); Wägner, Ralf, D-65468 Trebur (DE)
(74) Vertreter: Behrens, Helmut, Dipl.-Ing.

(56) Entgegenhaltungen:
- WO-A-92/13259
- GB-A- 2 128 761
- US-A- 2 986 931

## Beschreibung

Die Erfindung betrifft einen Kraftaufnehmer, insbesondere für den Einsatz in oberschaligen Plattformwaagen, mit einer als Biegebalken oder als Mehrfachbiegebalken ausgebildeten und als Kraft-Dehnungswandler dienenden Meßfeder, die aus einem einzigen Materialstück besteht und auf der Dehnungsmeßstreifen zur elektrischen Dehnungsmessung angebracht sind.

Kraftaufnehmer der angegebenen Art werden vornehmlich in elektronischen Plattformwaagen verwendet. Um eine funktionsfähige Waage zu erhalten, müssen derartige Kraftaufnehmer lediglich mit einer Grundplatte und einem Waagschalenträger verschraubt werden. Daneben werden derartige Kraftaufnehmer in der Industrie vielfach dort eingesetzt, wo eine außermittig eingeleitete Gewichtskraft zu messen ist.

Die Baugröße und das Gewicht derartiger Kraftaufnehmer nimmt mit steigender Nennlast und größeren Waagenplattformen zu. Typische Anwendungen der Kraftaufnehmer sind beispielsweise Waagen mit 60 kg bis 1500 kg Wägebereich und einer Plattformgröße von 0,4 m x 0,4 m bis 1,2 m x 1,2 m. Kraftaufnehmer für solche Waagen haben ein Gewicht von mehreren Kilogramm, obwohl sie meist aus Aluminium hergestellt sind. Der Materialpreis für den Werkstoff des Rohlings des Kraftaufnehmers wird somit zu einem bestimmenden Faktor der Herstellkosten.

Bei einem aus der DE 43 13 932 A1 bekannten Kraftaufnehmer der angegebenen Art hat die Meßfeder die Form eines langgestreckten Quaders, der an seinen beiden Enden durch Schrauben an einer Platte des Waagengehäuses bzw. an einem Waagschalenträger befestigt ist. Die Befestigungsbereiche der Meßfeder bestehen dabei aus dem gleichen hochwertigen und entsprechend teuren Material, das zur Herstellung der Meßfeder erforderlich ist, um eine weitestgehend nachwirkungs- und hysteresefreie Umwandlung von Kraft in Dehnung zu erhalten. Die Materialkosten des bekannten Kraftaufnehmers sind daher verhältnismäßig hoch.

Eine ähnliche Gestaltung der Meßfeder ist auch aus der DE 28 09 655 A1 bekannt, die einen Kraftaufnehmer in Form eines Balkens beschreibt, bei dem zur Kraftmessung Scherspannungen genutzt werden. Eine Ausführungsform des auf Scherung beanspruchten Balkens weist ein Doppel-T-Profil auf.

Aus der EP 0 227 850 B1 ist weiterhin ein Kraftaufnehmer bekannt, bei dem nur für die Funktionen Umwandlung der zu messenden Kraft in Materialverformungen und Parallelführung und Abstützung von Momenten hochwertige und daher teurere Legierungen verwendet werden. Die zur Befestigung an Einleitungsteilen für die Kraft und die Gegenkraft erforderlichen längeren Enden der Meßfeder werden hingegen durch rahmenartige Verbindungselemente gebildet, für die weniger anspruchsvolles und damit preiswerteres Material verwendet werden kann. Die kürzere Meßfeder ist in diese Verbindungselemente eingesetzt. Durch eine solche Ausgestaltung spart man zwar hochwertiges Material für die Meßfeder ein, man erhält aber ein dreiteiliges Bauelement, das zusätzlichen Aufwand für die Bearbeitung von Paßflächen und für die Montage erfordert.

Der Erfindung liegt die Aufgabe zugrunde, einen Kraftaufnehmer der eingangs genannten Art zu schaffen, der sich durch geringe Herstellkosten und einen geringen Materialaufwand auszeichnet.

Erfindungsgemäß wird diese Aufgabe dadurch gelöst, daß der Kraftaufnehmer, insbesondere für den Einsatz in oberschaligen Plattformwaagen, mit einer als Biegebalken oder als Mehrfachbiegebalken ausgebildeten und als Kraft-Dehnungswandler dienenden Meßfeder, die aus einem einzigen Materialstück besteht und auf der Dehnungsmeßstreifen zur elektrischen Dehnungsmessung angebracht sind, wobei die Meßfeder aus einem stangenförmigen Halbzeug mit über dessen Länge gleichbleibendem Querschnitt gebildet ist, dessen Längsachse in einer Mittelebene der Meßfeder verläuft und dessen Enden zueinander parallele Schnittflächen darstellen, die schräg und in gleichem Winkel zu der Mittelebene der Meßfeder verlaufen und wobei Bohrungen für Befestigungsmittel, wie z. B. Schrauben, in die schrägen Enden der Meßfeder eingebracht sind.

Die erfindungsgemäße Meßfeder hat von der Seite gesehen den Umriß eines Parallelogramms mit der oberen und unteren Kontur des Halbzeugs als dem einen parallelen Seitenpaar und den durch die Schnittflächen gebildeten Konturen als dem anderen parallelen Seitenpaar. Durch diese Formgestalt der Meßfeder verringert sich der Abstand der Schnittflächen nach Maßgabe des Schrägungswinkels im Vergleich zu ihrer Baulänge und dementsprechend auch der erforderliche Materialbedarf. Aus einer Halbzeugstange bestimmter Länge läßt sich somit beispielsweise im Vergleich zu herkömmlichen quaderförmigen Meßfedern eine größere Zahl von erfindungsgemäß ausgestalteten Meßfedern herstellen. Zwar ist das Zerspanungsvolumen bei einem schrägen Schnitt höher als bei einem rechtwinkeligen Schnitt, im Vergleich zu der erzielbaren Materialeinsparung ist dies jedoch vernachlässigbar.

Am deutlichsten treten die Vorteile der erfindungsgemäßen Gestaltung der Meßfeder zutage, wenn der Winkel zwischen den Schnittflächen und der Mittelebene im Bereich von 30° bis 60° liegt. Bei größeren Winkeln ist der Effekt der Materialeinsparung zu gering, sind die Winkel kleiner als 30°, so werden die Schnittflächen verhältnismäßig groß und die Steifigkeit der Befestigungsenden der Meßfeder nimmt zu sehr ab. Vorzugsweise beträgt der Winkel zwischen den Schnittflächen und der Mittelebene etwa 45°. Ein Winkel in dieser Größe führt zu einem günstigen Kompromiß hinsichtlich Materialersparnis, Bearbeitungsaufwand und konstruktiver Gestaltung der Meßfeder.

Nach einem weiteren Vorschlag der Erfindung kann die Meßfeder aus einem Halbzeug mit Doppel-T-Profil hergestellt sein. Durch den reduzierten Querschnitt eines solchen Ausgangsmaterials ergibt sich eine zusätzliche Materialersparnis im Vergleich zu einem rechteckigen Vollquerschnitt. Der Doppel-T-Querschnitt hat weiterhin den Vorteil, daß sich Bohrungen zum Befestigen der Meßfeder mittels Schrauben einfach und mit geringem Aufwand herstellen lassen, da diese jeweils nur im oberen bzw. unteren Flansch des Profils angebracht werden. Die Meßfeder kann weiterhin auch aus einem stangenförmigen Halbzeug mit einem rechteckigen, hohlen Querschnitt, z.B. einem Rechteckrohr oder einem Vierkantrohr hergestellt werden. Für die Herstellung der erfindungsgemäßen Meßfeder kann je nach Anwendung gewalztes oder stranggepreßtes Material verwendet werden.

Durch den schrägen Verlauf der Schnittflächen entstehen an den Enden der Meßfeder scharfe Kanten. Erfindungsgemäß können diese Kanten durch Anbringung einer Fase abgestumpft werden.

Die Erfindung wird nachfolgend anhand eines Ausführungsbeispiels näher erläutert, das in der Zeichnung dargestellt ist. Es zeigen
- Figur 1: eine Seitenansicht einer aus rechteckigem Vollprofil hergestellten Meßfeder gemäß der Erfindung,
- Figur 2: eine Ansicht der Meßfeder gemäß Figur 1 von oben,
- Figur 3: eine Seitenansicht einer Meßfeder aus einem Profil mit doppel-T-förmigem Querschnitt,
- Figur 4: eine Stirnansicht der Meßfeder gemäß Figur 3 und
- Figur 5: eine Ansicht der Meßfeder gemäß Figur 3 von oben.

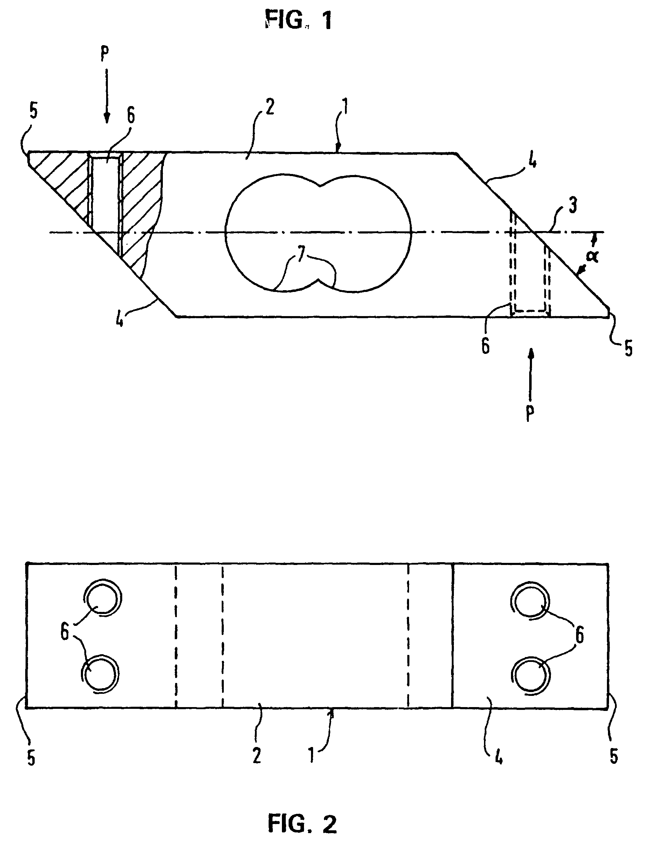

Die in den Figuren 1 und 2 dargestellte Meßfeder 1 besteht aus einem Abschnitt 2 eines stangenförmigen Halbzeugs, dessen Längsachse in der zur Lasteinleitungsrichtung P senkrechten Mittelebene 3 verläuft und einen über die Länge gleichbleibenden rechteckigen, massiven Querschnitt hat. Der Abschnitt 2 ist durch schräg zur Mittelebene 3 verlaufende Schnitte von dem Halbzeug abgetrennt. Die durch die Schnitte gebildeten Schnittflächen 4 verlaufen parallel zueinander und unter einem Winkel α von etwa 45° zur Mittelebene 3. Die spitz zulaufenden Enden des Abschnitts 3 sind durch spanabhebende Bearbeitung mit einer Fase 5 versehen. Zur Befestigung der Meßfeder 1 an einer Grundplatte und an einem Lasteinleitungsteil, beispielsweise einem Waagschalenträger, sind in den spitz zulaufenden Enden Gewindebohrungen 6 zur Aufnahme von Befestigungsschrauben vorgesehen. In der Mitte der Meßfeder 1 sind durch zwei parallele, sich überschneidende Bohrungen 7 Zonen verringerten Querschnitts gebildet, deren Dehnungsverhalten bei Belastungen durch in diesen Zonen angebrachte Dehnungsmeßstreifen gemessen wird.

Will man die beschriebene Meßfeder 1 mit einer herkömmlichen quaderförmigen Meßfeder gleicher Leistung vergleichen, so müßte letztere den gleichen rechteckigen Querschnitt und die gleiche Baulänge L wie die Meßfeder 1 haben. Die mit der Erfindung gegenüber einer quaderförmigen Meßfeder erzielbare Materialersparnis entspricht somit im wesentlichen dem Materialvolumen, das an beiden Enden der Meßfeder 1 ergänzt werden müßte, um die Quaderform zu vervollständigen. Dies ist etwa die Hälfte des für die Befestigungsenden benötigten Materials

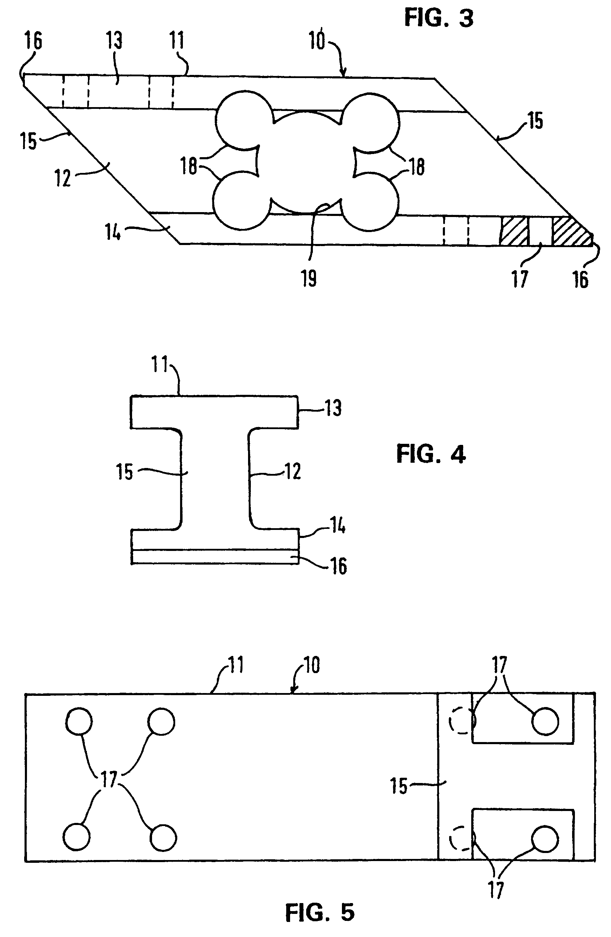

Die in den Figuren 3 bis 5 dargestellte Meßfeder 10 ist aus einem Abschnitt 11 eines Strangpreßprofils hergestellt, das einen doppel-T-förmigen Querschnitt hat, der aus einem mittigen Steg 12 und beiderseits des Stegs parallel zueinander angeordneten Flanschen 13, 14 gebildet ist. Der Abschnitt 11 ist durch zwei parallele Schnitte aus dem Strangpreßprofil beispielsweise mit Hilfe eines Sägeblatts herausgetrennt. Die Schnitte wurden dabei so geführt, daß die Schnittflächen 15 des Abschnitts 11 in zu dem Steg 12 senkrechten und zu den Flanschen 13, 14 in einem Winkel α von 45° geneigten Ebenen liegen. Die scharfen Kanten an den spitz zulaufenden Enden des Abschnitts 11 wurden zur Bildung von Fasen 16 um ein geringes Maß gekürzt. In den Flanschen 13, 14 sind an den spitz zulaufenden Enden in symmetrischer Anordnung Bohrungen 17 vorgesehen, die zur Befestigung der Meßfeder 10 an einem krafteinleitenden bzw. kraftaufnehmenden Bauteil mit Hilfe von Schrauben dienen. Zur Ausbildung zweier Biegebalken ist die Meßfeder 10 in ihrer Mitte mit einer Ausnehmung versehen, die durch eine größere Bohrung 18 und vier kleinere Bohrungen 19 gebildet ist. Die Bohrungen 19 liegen in symmetrischer Anordnung am Rand der zentralen Bohrung 18 und überlappen sich mit dieser geringfügig. Die Bohrung 18 befindet sich ausschließlich innerhalb des Stegs 12. Die Bohrungen 19 durchdringen teilweise den Steg 12 und teilweise die Flansche 13 bzw. 14 und bilden dadurch in beiden Flanschen 13, 14 Zonen geringerer Steifigkeit, deren Dehnungsverhalten mittels applizierter Dehnungsmeßstreifen gemessen wird.

Bei der Meßfeder gemäß den Figuren 3 bis 5 trägt sowohl der doppel-T-förmige Querschnitt des Ausgangsmaterials als auch die geneigte Anordnung der Trennschnitte zu der angestrebten Materialersparnis bei. Als besonders vorteilhaft erweist sich hierbei, daß durch den freien Zwischenraum zwischen den Flanschen 13, 14 auf beiden Seiten des Stegs 12 die Bohrungen 17 nur einen geringen Bearbeitungsaufwand erfordern und auch bereits vor dem Trennen der Abschnitte 11 aus dem Strangpreßprofil hergestellt werden können.

## Patentansprüche

1. Kraftaufnehmer, insbesondere für den Einsatz in oberschaligen Plattformwaagen, mit einer als Biegebalken oder als Mehrfachbiegebalken ausgebildeten und als Kraft-Dehnungswandler dienenden Meßfeder, die aus einem einzigen Materialstück besteht und auf der Dehnungsmeßstreifen zur elektrischen Dehnungsmessung angebracht sind, wobei die Meßfeder (1, 10) aus einem stangenförmigen Halbzeug mit über dessen Länge gleichbleibendem Querschnitt gebildet ist, dessen Längsachse in einer Mittelebene (3) der Meßfeder (1, 10) verläuft und dessen Enden zueinander parallele Schnittflächen (4, 15) darstellen, die schräg und in gleichem Winkel (α)zu der Mittelebene (3) der Meßfeder verlaufen und wobei Bohrungen (6, 17) für Befestigungsmittel, wie z. B. Schrauben, in die schrägen Enden der Meßfeder (1, 10) eingebracht sind.

2. Kraftaufnehmer nach Anspruch 1, wobei der Winkel (α) zwischen der Mittelebene (3) und den Schnittflächen (4, 15) 30° bis 60° beträgt.

3. Kraftaufnehmer nach Anspruch 2, wobei der Winkel (α) zwischen der Mittelebene (3) und den Schnittflächen (4, 15) etwa 45° beträgt.

4. Kraftaufnehmer nach einem der vorhergehenden Ansprüche, wobei die Meßfeder (10) aus einem Halbzeug mit einem doppel-T-förmigen Querschnitt hergestellt ist.

5. Kraftaufnehmer nach einem der Ansprüche 1 bis 3, wobei die Meßfeder (1) aus einem Halbzeug mit einem rechteckigen, massiven Querschnitt hergestellt ist.

6. Kraftaufnehmer nach einem der Ansprüche 1 bis 3, wobei die Meßfeder aus einem Halbzeug mit einem rechteckigen, hohlen Querschnitt, wie z.B. Rechteckrohr, Vierkantrohr, hergestellt ist.

7. Kraftaufnehmer nach einem der vorhergehenden Ansprüche, wobei die spitz zulaufenden Enden der Meßfeder (1, 10) durch Anbringen einer Fase (5, 16) abgestumpft sind.

## Claims

1. Force transducer, in particular for use in top-pan platform weighing machines, having a measurement spring constructed as a bending beam or as a multiple bending beam and serving as a force-strain converter, said measurement spring consisting of a single piece of material and having stain gauges attached thereon for electrical strain measurement, wherein the measurement spring (1, 10) is formed from a semi-finished product in bar form with a constant cross-section over its length, its longitudinal axis running in a central plane (3) of the measurement spring (1, 10) and its ends constituting parallel cut surfaces (4, 15), which run extend inclined and at the same angle (α) to the central plane (3) of the measurement spring and wherein holes (6, 17) are inserted in the inclined ends of the measurement spring (1, 10) for fastening means such as screws, for example.

2. Force transducer according to Claim 1, wherein the angle (α) between the central plane (3) and the cut surfaces (4, 5) amounts to 30° to 60°.

3. Force transducer according to Claim 2, wherein the angle (α) between the central plane (3) and the cut surfaces (4, 5) amounts to about 45°.

4. Force transducer according to one of the preceding claims, wherein the measurement spring (10) is made from a semi-finished product with a double T-shaped cross-section.

5. Force transducer according to one of Claims 1 to 3, wherein the measurement spring (1) is made from a semi-finished product with a rectangular, solid cross-section.

6. Force transducer according to one of Claims 1 to 3, wherein the measurement spring (1) is made from a semi-finished product with a rectangular, hollow cross-section, such as rectangular tube, square tube, for example.

7. Force transducer according to one of the preceding claims, wherein the ends of the measurement spring (1, 10) tapering to a point are blunted by the formation of a bevel (5, 16).

## Revendications

1. Capteur de force, destiné à être utilisé en particulier dans des bascules à plate-forme avec plateaux à la partie supérieure, comportant un ressort de mesure conformé en barre pliante ou en barre à pliage multiple et servant de convertisseur force-allongement, qui est constitué d'une seule pièce de matière et qui es placé sur la jauge d'allongement pour la mesure électrique de l'allongement, le ressort de mesure (1, 10) étant formé dans un semi-produit en forme de barre de section constante sur sa longueur, et dont l'axe longitudinal s'étend dans un plan médian (3) du ressort de mesure (1, 10) et dont les extrémités constituent des surfaces de coupe (4, 15) parallèles entre elles, qui s'étendent obliquement et suivant le même angle (α) par rapport au plan médian (3) du ressort de mesure, et des perçages (6, 17) pour des moyens de fixation, tels que par exemple des vis étant pratiqués dans les extrémités obliques du ressort de mesure (1, 10).

2. Capteur de force selon la revendication 1, dans lequel l'angle (α) entre le plan médian (3) et les surfaces de coupe (4, 15) est compris entre 30° et 60°.

3. Capteur de force selon la revendication 2, dans lequel l'angle (α) entre le plan médian (3) et les surfaces de coupe (4, 15) est d'environ 45°.

4. Capteur de force selon l'une des revendications précédentes, dans lequel le ressort de mesure (10) est fabriqué dans un semi-produit avec une section en double T.

5. Capteur de force selon l'une des revendications 1 à 3, dans lequel le ressort de mesure (1) est fabriqué dans un demi-produit de section rectangulaire massive.

6. Capteur de force selon l'une des revendications 1 à 3, dans lequel le ressort de mesure est fabriqué dans un demi-produit de section rectangulaire creuse, tel que par exemple un tube rectangulaire, un tube carré.

7. Capteur de force selon l'une des revendications précédentes, dans lequel des extrémités se terminant en pointe du ressort de mesure (1, 10) sont émoussées par réalisation d'un biseau (5, 16).
